# EUROPÄISCHE PATENTSCHRIFT

(11) **EP 2 791 151 B1**
(45) Veröffentlichungstag und Bekanntmachung des Hinweises auf die Patenterteilung: **07.09.2016**
(21) Anmeldenummer: 12799076.0
(22) Anmeldetag: 08.12.2012
(51) Int. Cl.: C07F 9/30, C07F 9/38, C08K 5/5313, C08K 5/5317

(54) **GEMISCHE AUS DIALKYLPHOSPHINSÄUREN UND ALKYLPHOSPHONSÄUREN, EIN VERFAHREN ZU DEREN HERSTELLUNG UND IHRE VERWENDUNG**
MIXTURES OF DIALKYLPHOSPHINIC ACIDS AND ALKYLPHOSPHONIC ACIDS, A PROCESS FOR PREPARATION THEREOF AND USE THEREOF
MÉLANGES D'ACIDES DIALKYLPHOSPHINIQUES ET D'ACIDES ALKYLPHOSPHONIQUES, PROCÉDÉ POUR LEUR PRÉPARATION ET LEUR UTILISATION

(30) Priorität: 16.12.2011 DE 102011121591
(43) Veröffentlichungstag der Anmeldung: 22.10.2014
(73) Patentinhaber: CLARIANT INTERNATIONAL LTD, 4132 Muttenz (CH)
(72) Erfinder: SCHNEIDER, Fabian, 69214 Eppelheim (DE); OSTEROD, Frank, 50933 Köln (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/005079
(87) Internationale Veröffentlichungsnummer: WO 2013/087180

(56) Entgegenhaltungen:
- EP-A1- 1 544 206
- EP-B1- 1 544 205
- WO-A1-2005/105818
- US-A1- 2009 165 598
- DATABASE CA [Online] CHEMICAL ABSTRACTS SERVICE, COLUMBUS, OHIO, US; 1989, TSIKALOVA, M. V. ET AL: "Alkylation of white phosphorus by organocobalt(III) complexes", XP002691915, gefunden im STN Database accession no. 1990:179205 & TSIKALOVA, M. V. ET AL: "Alkylation of white phosphorus by organocobalt(III) complexes", DOKLADY AKADEMII NAUK SSSR , 308(2), 386-8 [CHEM.] CODEN: DANKAS; ISSN: 0002-3264, 1989,
- DATABASE REAXYS [Online] 1889, Litthauer: "Rx-ID: 5813007", XP002691916,accession no. 5813007 Database accession no. 5813007 & LITTHAUER: CHEM. BER., Bd. 22, 1889, Seiten 2144-2147,
- DATABASE REAXYS [Online] 1982, Andreev et al: "Rx-ID: 4163921", XP002691917,accession no. 4163921 Database accession no. 4163921 & ANDREEV ET AL: J. GEN. CHEM., Bd. 52, Nr. 7, 1982, Seiten 1530-1537,
- DATABASE REAXYS [Online] Elsevier; 2005, Trofimov et al: "Rx-ID: 10418003", XP002691918,accession no. 10418003 Database accession no. 10418003 & TROFIMOV ET AL: RUSS. J. GEN. CHEM., Bd. 75, Nr. 5, 2005, Seiten 684-688,
- DATABASE REAXYS [Online] ELSEVIER; 10. August 2011 (2011-08-10), Petit et al: "RX-ID: 31514043", XP002691919,accession no. 31514043 Database accession no. 31514043 & PETIT ET AL: ADV. SYNTH. CATAL., Bd. 353, Nr. 11-12, 10. August 2011 (2011-08-10), Seiten 1883-1888,

## Beschreibung

Die vorliegende Erfindung betrifft die Verwendung von Gemischen aus mindestens einer Dialkylphosphinsäure und mindestens einer Alkylphosphonsäure.

EP 1 544 205 und EP 1 544 206 offenbaren Dialkylphosphinsäuresalze zur Herstellung von Flammschutzmitteln für thermoplastische Polymere wie Polyester, Polystyrol oder Polyamid und für Duroplaste.

Bei der Herstellung von Leiterplatten, die in zunehmenden Maß in verschiedenen Geräten, z. B. Computer, Kameras, Mobiltelefonen, LCD-, TFT-Bildschirmen und anderen Elektronikgeräten Verwendung finden, werden unterschiedliche Materialien, insbesondere Kunststoffe eingesetzt. Hierzu gehören vor allem Duroplaste, glasfaserverstärkte Duroplaste und Thermoplaste. Besonders oft werden wegen ihrer guten Eigenschaften Epoxidharze genutzt.

Gemäß den entsprechenden Normen (IPC-4101, Specification for Base Materials for Rigid ans Multilayer Printed Boards) müssen diese Leiterplatten flammwidrig bzw. flammfest ausgerüstet werden.

Die thermische Expansion von Leiterplatten stellt bei deren Herstellung ein Problem dar. Die Bedingungen der Elektronikfertigung von Leiterplatten verlangen, dass Leiterplatten hohe thermische Belastungen ohne Schädigungen oder Verformungen aushalten. Das Auftragen der Leiterbahnen (bleifreies Löten) auf Leiterplatten erfolgt bei Temperaturen bis ca. 260 °C.

Daher ist es von Bedeutung, dass sich Leiterplatten unter thermischem Stress nicht verziehen und die Produkte maßhaltig bleiben.

Die thermische Expansion ist vor allem auch bereits bei Prepregs (Kurzform für preimpregnated fibres, das sind vorimprägnierte Fasern) und Laminaten von Bedeutung, da diese die Rohformen bzw. Vorstufen von Leiterplatten darstellen.

Es ist somit wichtig die thermische Expansion von Prüfkörpern zu minimieren, um ein gutes, maßhaltiges Produkt (fertige Leiterplatte) zu erhalten.

Es ist daher Aufgabe der vorliegenden Erfindung, Kunststoffe für Prepregs, Leiterplatten und Laminate so auszurüsten, dass diese - wenn überhaupt - nur einer sehr geringen thermischen Expansion unterliegen und die Maßhaltigkeit erfüllt wird.

Diese Aufgabe wird gelöst durch die Verwendung von Gemischen von mindestens einer Dialkylphosphinsäure der Formel (I) 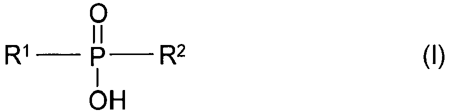 worin
- R¹, R²: gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 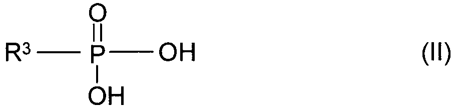 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 99,9 bis 0,1 Gew.-% Alkylphosphonsäure der Formel (II) enthält als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Die vorgenannte Aufgabe wird ebenfalls gelöst durch die Verwendung von Gemischen von mindestens einer Dialkylphosphinsäure der Formel (I) 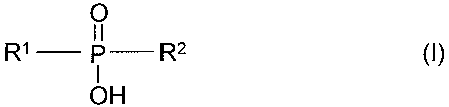 worin
- R¹, R²: gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 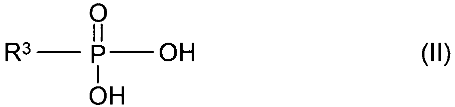 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

Bevorzugt sind bei der vorgenannten Verwendung R¹, R² und R³ gleich oder verschieden und bedeuten Methyl, Ethyl, n-Propyl, iso-Propyl, n-Butyl, iso-Butyl, tert.-Butyl, n-Pentyl, iso-Pentyl, n-Hexyl, iso-Hexyl und/oder Phenyl.

Bei der Verwendung enthalten die Gemische bevorzugt 80 bis 99,9 Gew.-% Dialkylphosphinsäure der Formel (I) und 20 bis 0,1 Gew.-% Alkylphosphonsäure der Formel (II).

Insbesondere finden Gemische Verwendung, die 95 bis 99,9 Gew.-% Dialkylphosphinsäure der Formel (I) und 5 bis 0,1 Gew.-% Alkylphosphonsäure der Formel (II) enthalten.

Besonders vorteilhaft in der Verwendung sind Gemische, die 98 bis 99,9 Gew.-% Dialkylphosphinsäure der Formel (I) und 2 bis 0,1 Gew.-% Alkylphosphonsäure der Formel (II) enthalten.

Bevorzugt werden in der Verwendung der Dialkylphosphinsäuren Diethylphosphinsäure, Ethyl-propylphosphinsäure, Ethyl-butylphosphinsäure, Ethyl-pentylphosphinsäure, Ethyl-hexylphosphinsäure, Dipropylphosphinsäure, Propyl-butylphosphinsäure, Propyl-pentylphosphinsäure, Propyl-hexylphosphinsäure, Dibutylphosphinsäure, Butyl-pentylphosphinsäure, Butyl-hexylphosphinsäure, Dipentylphosphinsäure, Pentyl-hexylphosphinsäure und/oder Dihexylphosphinsäure; und bei der Alkylphosphonsäure um Ethylphosphonsäure, Propylphosphonsäure, Butylphosphonsäure, Pentylphosphonsäure oder Hexylphosphonsäure eingesetzt.

Verwendung finden bevorzugt Gemische, enthaltend 98 bis 99,9 Gew.-% Diethylphosphinsäure und 0,1 bis 2 Gew.-% Ethylphosphonsäure.

Flammgeschützte thermoplastische oder duroplastische Polymerformmasse, Polymer-Formkörper, -Filme, -Fäden und -Fasern enthaltend 0,5 bis 45 Gew.-% eines Gemisches von mindestens einer Dialkylphosphinsäure der Formel (I) 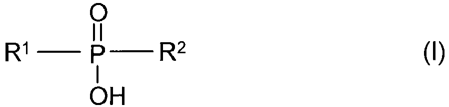 worin
- R¹, R²: gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 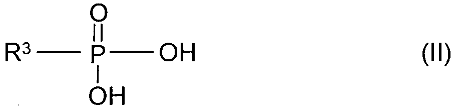 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft auch eine Flammgeschützte thermoplastische oder duroplastische Polymerformmasse, Polymer-Formkörper, -Filme, -Fäden und - Fasern enthaltend 0,5 bis 45 Gew.-% eines Gemisches von mindestens einer Dialkylphosphinsäure der Formel (I) 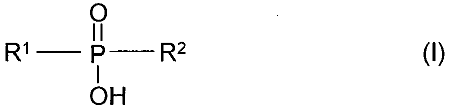 worin
- R¹, R²: gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 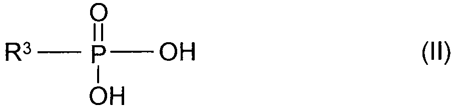 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft schließlich auch eine flammgeschützte thermoplastische oder duroplastische Polymerformmasse, Polymer-Formkörper, -Filme, -Fäden und -Fasern, enthaltend 1 bis 30 Gew.-% eines Gemisches von mindestens einer Dialkylphosphinsäure der Formel (I) 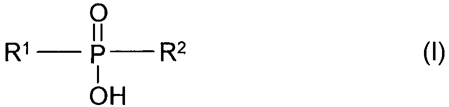 worin
- R¹, R²: gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 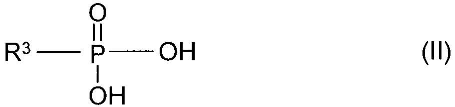 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

Bevorzugte Zweier-Mischungen Gemische von mindestens einer Diphosphinsäure der Formel (I) und mindestens einer Dialkylphosphonsäure der Formel (II) setzen sich zusammen aus
Diethylphosphinsäure und Ethylphosphonsäure,
Diethylphosphinsäure und Propylphosphonsäure,
Diethylphosphinsäure und Butylphosphonsäure,
Diethylphosphinsäure und Pentylphosphonsäure,
Diethylphosphinsäure und Hexylphosphonsäure,
Ethyl-propylphosphinsäure und Ethylphosphonsäure,
Ethyl-propylphosphinsäure und Propylphosphonsäure,
Ethyl-propylphosphinsäure und Butylphosphonsäure,
Ethyl-propylphosphinsäure und Pentylphosphonsäure,
Ethyl-propylphosphinsäure und Hexylphosphonsäure,
Ethyl-butylphosphinsäure und Ethylphosphonsäure,
Ethyl-butylphosphinsäure und Propylphosphonsäure,
Ethyl-butylphosphinsäure und Butylphosphonsäure,
Ethyl-butylphosphinsäure und Pentylphosphonsäure,
Ethyl-butylphosphinsäure und Hexylphosphonsäure,
Ethyl-pentylphosphinsäure und Ethylphosphonsäure,
Ethyl-pentylphosphinsäure und Propylphosphonsäure,
Ethyl-pentylphosphinsäure und Butylphosphonsäure,
Ethyl-pentylphosphinsäure und Pentylphosphonsäure,
Ethyl-pentylphosphinsäure und Hexylphosphonsäure,
Ethyl-hexylphosphinsäure und Ethylphosphonsäure,
Ethyl-hexylphosphinsäure und Propylphosphonsäure,
Ethyl-hexylphosphinsäure und Butylphosphonsäure,
Ethyl-hexylphosphinsäure und Pentylphosphonsäure,
Ethyl-hexylphosphinsäure und Hexylphosphonsäure,
Dipropylphosphinsäure und Ethylphosphonsäure,
Dipropylphosphinsäure und Propylphosphonsäure,
Dipropylphosphinsäure und Butylphosphonsäure,
Dipropylphosphinsäure und Pentylphosphonsäure,
Dipropylphosphinsäure und Hexylphosphonsäure,
Propyl-butylphosphinsäure und Ethylphosphonsäure,
Propyl-butylphosphinsäure und Propylphosphonsäure,
Propyl-butylphosphinsäure und Butylphosphonsäure,
Propyl-butylphosphinsäure und Pentylphosphonsäure,
Propyl-butylphosphinsäure und Hexylphosphonsäure,
Propyl-pentylphosphinsäure und Ethylphosphonsäure,
Propyl-pentylphosphinsäure und Propylphosphonsäure,
Propyl-pentylphosphinsäure und Butylphosphonsäure,
Propyl-pentylphosphinsäure und Pentylphosphonsäure,
Propyl-pentylphosphinsäure und Hexylphosphonsäure,
Propyl-hexylphosphinsäure und Ethylphosphonsäure,
Propyl-hexylphosphinsäure und Propylphosphonsäure,
Propyl-hexylphosphinsäure und Butylphosphonsäure,
Propyl-hexylphosphinsäure und Pentylphosphonsäure,
Propyl-hexylphosphinsäure und Hexylphosphonsäure,
Dibutylphosphinsäure und Ethylphosphonsäure,
Dibutylphosphinsäure und Propylphosphonsäure,
Dibutylphosphinsäure und Butylphosphonsäure,
Dibutylphosphinsäure und Pentylphosphonsäure,
Dibutylphosphinsäure und Hexylphosphonsäure,
Butyl-pentylphosphinsäure und Ethylphosphonsäure,
Butyl-pentylphosphinsäure und Propylphosphonsäure,
Butyl-pentylphosphinsäure und Butylphosphonsäure,
Butyl-pentylphosphinsäure und Pentylphosphonsäure,
Butyl-pentylphosphinsäure und Hexylphosphonsäure,
Butyl-hexylphosphinsäure und Ethylphosphonsäure,
Butyl-hexylphosphinsäure und Propylphosphonsäure,
Butyl-hexylphosphinsäure und Butylphosphonsäure,
Butyl-hexylphosphinsäure und Pentylphosphonsäure,
Butyl-hexylphosphinsäure und Hexylphosphonsäure,
Dipentylphosphinsäure und Ethylphosphonsäure,
Dipentylphosphinsäure und Propylphosphonsäure,
Dipentylphosphinsäure und Butylphosphonsäure,
Dipentylphosphinsäure und Pentylphosphonsäure,
Dipentylphosphinsäure und Hexylphosphonsäure,
Pentyl-hexylphosphinsäure und Ethylphosphonsäure,
Pentyl-hexylphosphinsäure und Propylphosphonsäure,
Pentyl-hexylphosphinsäure und Butylphosphonsäure,
Pentyl-hexylphosphinsäure und Pentylphosphonsäure,
Pentyl-hexylphosphinsäure und Hexylphosphonsäure,
Dihexylphosphinsäure und Ethylphosphonsäure,
Dihexylphosphinsäure und Propylphosphonsäure,
Dihexylphosphinsäure und Butylphosphonsäure,
Dihexylphosphinsäure und Pentylphosphonsäure,
Dihexylphosphinsäure und Hexylphosphonsäure.

Daneben sind auch Dreier-Gemische, wie etwa Diethylphosphinsäure und Ethylphosphonsäure und Butyl-phosphonsäure, Diethylphosphinsäure und Butyl-ethylphosphinsäure und Butyl-phosphonsäure, oder Vierer-Gemische, wie z. B. Diethylphosphinsäure und Octyl-phosphonsäure und Butyl-ethyl-phosphinsäure und Ethyl-phosphonsäure, und andere Mehrfach-Gemische möglich.

Besonders bevorzugt sind R¹ und R² gleich oder verschieden und bedeuten Ethyl und/oder Butyl und R³ bedeutet Ethyl oder Butyl.

Die Erfindung umfasst insbesondere Gemsiche bestehend aus 98 bis 99,9 Gew.-% Diethylphosphinsäure und 2 bis 0,1 Gew.-% Ethylphosphonsäure.

Bevorzugt handelt es sich bei dem Synergist um mindestens einen ausdehnungsneutralen Stoff. Der ausdehnungsneutrale Stoff verhindert die Ausdehnung des Polymers oder reduziert diese auf äußerst geringe Werte.

Bevorzugte Mischungen mit einem oder mehreren Synergisten enthalten 50 bis 99 Gew.-% Gemische von mindestens einer Dialkylphosphinsäure der Formel (I) mit mindestens einer Alkylphosphonsäure der Formel (II) und 1 bis 50 Gew.-% Synergist.

Bevorzugt ist die Verarbeitung des erfindungsgemäßen Gemisches von mindestens einer Dialkylphosphinsäure der Formel (I) und mindestens einer Alkylphosphonsäure der Formel (II) durch Einmischen in ein Polymersystem.

Das Einmischen erfolgt durch Kneten, Dispergieren und/oder Extrudieren.

Bevorzugt erfolgt die Verwendung des erfindungsgemäßen Gemisches von mindestens einer Dialkylphosphinsäure der Formel (I) und mindestens einer Alkylphosphonsäure der Formel (II) auch durch additive Einarbeitung in ein Polymersystem.

Besonders bevorzugt erfolgt die Verwendung Gemisches von mindestens einer Dialkylphosphinsäure der Formel (I) und mindestens einer Alkylphosphonsäure der Formel (II) durch Einreaktion in ein Polymersystem. Die Einreaktion ist durch eine resultierende, permanente Bindung zu den Polymersträngen des Polymersystems gekennzeichnet, wodurch das erfindungsgemäße Gemisch von mindestens einer Dialkylphosphinsäure der Formel (I) und mindestens einer Alkylphosphonsäure der Formel (II) aus dem Polymer nicht herausgelöst werden kann.

Die erfindungsgemäßen Gemische von mindestens einer Dialkylphosphinsäure der Formel (I) und mindestens einer Alkylphosphonsäure der Formel (II) können mit weiteren Flammschutzmitteln und weiteren Synergisten eingesetzt werden. Zu den weiteren Flammschutzmitteln gehören beispielsweise Phosphorverbindungen wie Phosphinate, Phosphonate, Phosphate, Phosphonsäuren, Phosphinsäuren, Phosphorsäuren, Phosphane, Phosphanoxide, Phosphoroxide und andere.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt stammen die Polymersysteme aus der Gruppe der thermoplastischen Polymere wie Polyamid, Polyester oder Polystyrol und/oder duroplastischen Polymere.

Besonders bevorzugt handelt es sich bei den duroplastischen Polymeren um Epoxidharze.

Besonders bevorzugt handelt es sich bei den duroplastischen Polymeren um Epoxidharze, die mit Phenolen und/oder Dicyandiamid [allgemeiner: Phenolderivaten (Resole); Alkohole und Amine, insbesondere Phenolderivate und Dicyandiamid) gehärtet sind.

Besonders bevorzugt handelt es sich bei den duroplastischen Polymeren um Epoxidharze, die mit Phenolen und/oder Dicyandiamid und/oder einem Katalysator gehärtet sind.

Bevorzugt handelt es sich bei den Katalysatoren um Imidazolverbindungen.

Bevorzugt handelt es sich bei den Epoxidharzen um Polyepoxidverbindungen.

Bevorzugt stammen die Epoxidharze aus der Gruppe der Novolacke und der Bisphenol-A Harze.

Erfindungsgemäß einsetzbare Polymere sind duroplastische und thermoplastische Polymere.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol^{®} 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Sagex^{®} und Telgopor^{®}.

Bevorzugt handelt es sich bei den Polymeren um halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6, Fa. DuPont, Zytel^{®} 101, Fa. DuPont; Durethan A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10, Fa. DuPont), Polyamid 6/12 (Poly(hexamethylendodecanediamid), Nylon^{®} 6/12, Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).
Die Polymere können lasermarkierbar sein.

Bevorzugt weist die hergestellte Formmasse eine rechteckige Form mit regelmäßiger oder unregelmäßiger Grundfläche, Würfelform, Quaderform, Kissenform, Prismenform auf.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: Kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.
V-1: Kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0.
V-2: Zündung der Watte durch brennendes Abtropfen, übrige Kriterien wie bei V-1.

Nicht klassifizierbar (nkl): Erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

Eingesetzte Chemikalien und Abkürzungen:
Phenolnovolak: Bakelite^{®} PF 0790, Fa. Hexion

Die Erfindung wird durch die nachstehenden Beispiele erläutert:

### Beispiel 1

Zunächst wird nach dem Beispiel 2 der EP-B-1544205 das Natriumsalz der Diethylphosphinsäure hergestellt, in dem 1500 g Natriumhypophosphit-Monohydrat in 7,5 kg Wasser gelöst wurden und nach Aufheizen der Reaktionsmischung auf 100 °C Ethylen bis zur Sättigung in den Reaktor eingeleitet wurde. Unter Ethylendruck wurde dann eine Lösung von 17 g Natriumperoxodisulfat in 300 g Wasser zudosiert. Man erhält eine wässrige Reaktionslösung vom Natriumsalz der Diethylphosphinsäure, die durch Behandeln mit Salpetersäure, Eindampfen, Filtrieren und Destillation (1 mbar, 184 °C) in ein Gemisch aus Diethylphosphinsäure (99,9 Gew.-%) und Ethylphosphonsäure (0,1 Gew.-%) überführt wird. (Ausbeute: 92 %).

### Beispiel 2

Zunächst wird wie in Beispiel 1 eine wässrige Reaktionslösung des Natriumsalzes der Diethylphosphinsäure hergestellt. Diese wird anschließend durch Behandeln mit Salpetersäure, Eindampfen, Filtrieren und Destillation (1 mbar, 180 - 190 °C) in ein Gemisch aus Diethylphosphinsäure (98 Gew.-%) und Ethylphosphonsäure (2 Gew.-%) überführt (Ausbeute: 92 %).

### Beispiel 3

Zunächst wird wie ein Beispiel 1 eine wässrige Reaktionslösung des Natriumsalzes der Diethylphosphinsäure hergestellt, allerdings wurden lediglich 95 % der benötigten Ethylenmenge eingesetzt. Diese Lösung wird anschließend durch Behandeln mit Salpetersäure, Eindampfen, Filtrieren und Destillation (1 mbar, 180 - 190 °C) in ein Gemisch aus Diethylphosphinsäure (90 Gew.-%) und Ethylphosphonsäure (10 Gew.-%) überführt (Ausbeute: 89 %).

### Beispiel 4

Zunächst wird wie ein Beispiel 1 eine wässrige Reaktionslösung des Natriumsalzes der Diethylphosphinsäure hergestellt, allerdings wurden lediglich 80 % der benötigten Ethylenmenge eingesetzt. Diese Lösung wird anschließend durch Behandeln mit Salpetersäure, Eindampfen, Filtrieren und Destillation (1 mbar, 175 - 195 °C) in ein Gemisch aus Diethylphosphinsäure (60 Gew.-%) und Ethylphosphonsäure (40 Gew.-%) überführt (Ausbeute: 93 %).

### Beispiel 5

Zunächst wird wie ein Beispiel 1 eine wässrige Reaktionslösung des Natriumsalzes der Diethylphosphinsäure hergestellt, allerdings wurden lediglich 75 % der benötigten Ethylenmenge eingesetzt. Diese Lösung wird anschließend durch Behandeln mit Salpetersäure, Eindampfen, Filtrieren und Destillation (1 mbar, 175 - 195 °C) in ein Gemisch aus Diethylphosphinsäure (50 Gew.-%) und Ethylphosphonsäure (50 Gew.-%) überführt (Ausbeute: 92 %).

### Vorschrift zur Herstellung von Polymerformkörpern:

### a) Herstellung von phosphormodifiziertem Epoxidharz

In einer 2 I-Fünfhalskolbenapparatur werden 1000 g des Epoxidharzes (z. B. Beckopox EP 140) vorgelegt. Es wird über eine Stunde auf 110 °C geheizt und im Vakuum flüchtige Komponenten entfernt.

Danach wird das Reaktionsgemisch mit Stickstoff inertisiert und die Temperatur im Kolben auf 170 °C erhöht. Jeweils 118 g des Gemisches der Phosphorverbindungen (ausgewählt aus den Beispielen 1 bis 5) werden unter Rühren und Stickstoffdurchfluss zugegeben wobei eine exotherme Reaktion beobachtet wird. Das erhaltene Harz ist gelb verfärbt und fließfähig.

### b) Herstellung von Epoxidharz Probekörpern

100 Teile des phosphormodifizierten Epoxidharzes werden mit einem entsprechenden OH Äquivalent Phenolnovolak (Hydroxidäquivalente 105 g/mol, Schmelzpunkt 85 - 95 °C) gemischt und auf 150 °C aufgeheizt. Hierbei verflüssigen sich die Komponenten. Man rührt langsam bis eine homogene Mischung entsteht und lässt auf 130 °C abkühlen. Nun gibt man 0,03 Teile 2-Phenylimidazol zu und rührt nochmals 5 - 10 min. Im Anschluss wird der Ansatz warm in eine Schale gegossen und für 2 h bei 140 °C und 2 h bei 200 °C ausgehärtet.

### c) Herstellung Epoxidharz Laminat

In 63 Teilen Aceton und 27 Teilen Dowanol^{®} PM werden 100 Teile phosphormodifiziertes Epoxidharz nach b) gegeben und mit der entsprechenden Menge Phenolharz versetzt. Man lässt den Ansatz 30 Min. rühren und gibt nun 2-Phenylimidazol zu. Danach wird der Ansatz über ein 400 µm Sieb filtriert um überschüssige Harzpartikel zu entfernen. Nun wird ein Glasgewebe (Typ 7628, 203 g/m²) in die Lösung eingetaucht, bis eine vollständige Benetzung des Gewebes stattgefunden hat. Das benetzte Gewebe wird aus der Mischung gezogen und überschüssiges Harz entfernt. Im Anschluss wird das benetze Gewebe stufenweise im Trockenschrank für kurze Zeit bei Temperaturen bis auf 165 °C vorgehärtet und danach in einer Heizpresse ausgehärtet. Der Harzanteil der ausgehärteten Laminate beträgt 30 - 50 %.

Von dem hergestellten Formkörper, einem Laminat, wird die thermische Ausdehnung nach ASTM E831-06 bestimmt.

### Beispiel 6

Nach der allgemeinen Vorschrift zur Herstellung eines Polymerformkörpers wird mit 100 % eines Bisphenol-A Harzes, ohne Anteile der erfindungsgemäßen Mischung aus Diethylphosphinsäure und Ethylphosphonsäure ein Laminat hergestellt.

### Referenzbeispiel 7

Nach dem Beispiel 3 der EP-B-1544205 werden 1500 g Natriumhypophosphit-Monohydrat in 7,5 kg Wasser gelöst wurden und nach Aufheizen der Reaktionsmischung auf 100 °C Ethylen bis zur Sättigung in den Reaktor eingeleitet wurde. Unter Ethylendruck wurde dann eine Lösung von 32 g Ammoniumperoxodisulfat in 300 g Wasser zu dosiert. Das erhaltene Produkt wurde dann mit der äquivalenten Menge Schwefelsäure neutralisiert und in Diethylphosphinsäure überführt und entsprechend gereinigt.
Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der vorgenannten Diethylphosphinsäure ein Formkörper hergestellt.

### Referenzbeispiel 8

Nach EP-A-2178891 wird aus Phosphinsäure mittels Katalystor und Ethylen Ethylphosphinsäure erhalten, die mittels Veresterung und Destillation gereinigt wird. Durch anschließende Oxidation mit Sauerstoff wird reine Ethylphosphonsäure erhalten.
Nach der allgemeinen Vorschrift zur Herstellung eines Polymerformkörpers wird dann mit einer Zusammensetzung aus 90 Gew.-% Bisphenol-A Harz mit Härter und Katalysator und 10 Gew.-% der erhaltenen Ethylphosphonsäure ein Formkörper hergestellt

### Beispiel 9

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Diethylphosphinsäure und Ethylphosphonsäure nach Beispiel 1 ein Formkörper hergestellt.

### Beispiel 10

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Diethylphosphinsäure und Ethylphosphonsäure nach Beispiel 2 ein Formkörper hergestellt.

### Beispiel 11

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Diethylphosphinsäure und Ethylphosphonsäure nach Beispiel 3 ein Formkörper hergestellt.

### Beispiel 12

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Diethylphosphinsäure und Ethylphosphonsäure nach Beispiel 4 ein Formkörper hergestellt.

### Beispiel 13

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% des erfindungsgemäßen Gemisches aus Diethylphosphinsäure und Ethylphosphonsäure nach Beispiel 5 ein Formkörper hergestellt.

Die Ergebnisse sind in nachfolgender Tabelle wiedergegeben:

| Beispiel | Zusammensetzung Polymersystem / Stoffgemisch | Stoffgemisch Dialkylphosphinsäure / Alkylphosphonsäure | Thermischer Ausdehnungskoefffizient 0° - 100° [ppm/°C] | | |
|---|---|---|---|---|---|
| | | | Z | X | Y |
| 6 | 100 : 0 | | 69 | 20 | 7 |
| 7 | 90 : 10 | 100 : 0 | 68 | 20 | 7 |
| 8 | 90 : 10 | 0 : 100 | 70 | 21 | 7 |
| 9 | 90 : 10 | 99,9 : 0,1 | 66 | 18 | 5 |
| 10 | 90 : 10 | 98 : 2 | 63 | 16 | 5 |
| 11 | 90 : 10 | 90 : 10 | 60 | 16 | 5 |
| 12 | 90 : 10 | 60 : 40 | 58 | 14 | 4 |
| 13 | 90 : 10 | 50 : 50 | 58 | 13 | 4 |

Im Vergleich zum reinen Laminat (Beispiel 6) nehmen die Werte des Laminats mit dem erfindungsgemäßen Stoffgemisch aus Diethylphosphinsäure und Ethylphosphonsäure ab, die thermische Ausdehnung ist somit sehr gering. Eine Erhöhung des Ethylphosphonsäureanteils bewirkt eine weitere Verbesserung.

Im Vergleich zum Stand der Technik (Beispiel 6) zeigen die erfindungsgemäßen Mischungen geringere Werte für den thermischen Ausdehnungskoeffizienten, d. h. dass die erfindungsgemäßen Produkte zu einer geringeren Ausdehnung der hergestellten Formkörper führen und somit den Anforderungen an die Maßhaltigkeit genügen.

## Patentansprüche

1. Verwendung von Gemischen von mindestens einer Dialkylphosphinsäure der Formel (I) 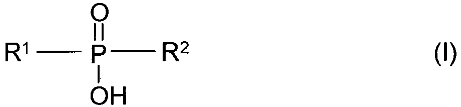 worin
R¹, R² gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 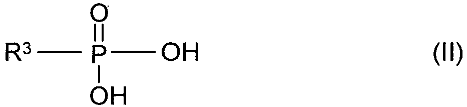 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

2. Verwendung von Gemischen von mindestens einer Dialkylphosphinsäure der Formel (I) 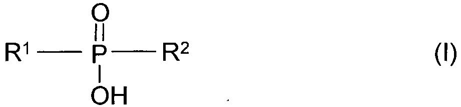 worin
R¹, R² gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 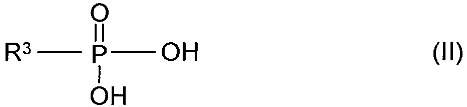 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

3. Verwendung nach Anspruch 1 oder 2, **dadurch gekennzeichnet, dass** R¹, R² und R³ gleich oder verschieden sind und Methyl, Ethyl, n-Propyl, iso-Propyl, n-Butyl, iso-Butyl, tert.-Butyl, n-Pentyl, iso-Pentyl, n-Hexyl, iso-Hexyl und/oder Phenyl bedeuten.

4. Verwendung nach einem oder mehreren der Ansprüche 1 bis 3, **dadurch gekennzeichnet, dass** sie 80 bis 99,9 Gew.-% Dialkylphosphinsäure der Formel (I) und 20 bis 0,1 Gew.-% Alkylphosphonsäure der Formel (II) enthalten.

5. Verwendung nach einem oder mehreren der Ansprüche 1 bis 4, **dadurch gekennzeichnet, dass** sie 95 bis 99,9 Gew.-% Dialkylphosphinsäure der Formel (I) und 5 bis 0,1 Gew.-% Alkylphosphonsäure der Formel (II) enthalten.

6. Verwendung nach einem oder mehreren der Ansprüche 1 bis 5, **dadurch gekennzeichnet, dass** sie 98 bis 99,9 Gew.-% Dialkylphosphinsäure der Formel (I) und 2 bis 0,1 Gew.-% Alkylphosphonsäure der Formel (II) enthalten.

7. Verwendung nach einem oder mehreren der Ansprüche 1 bis 6, **dadurch gekennzeichnet, dass** es sich bei der Dialkylphosphinsäure um Diethylphosphinsäure, Ethyl-propylphosphinsäure, Ethyl-butylphosphinsäure, Ethyl-pentylphosphinsäure, Ethyl-hexylphosphinsäure, Dipropylphosphinsäure, Propyl-butylphosphinsäure, Propyl-pentylphosphinsäure, Propyl-hexylphosphinsäure, Dibutylphosphinsäure, Butyl-pentylphosphinsäure, Butyl-hexylphosphinsäure, Dipentylphosphinsäure, Pentyl-hexylphosphinsäure und/oder Dihexylphosphinsäure; und bei der Alkylphosphonsäure um Ethylphosphonsäure, Propylphosphonsäure, Butylphosphonsäure, Pentylphosphonsäure oder Hexylphosphonsäure handelt.

8. Verwendung nach einem oder mehreren der Ansprüche 1 bis 7, **dadurch gekennzeichnet, dass** sie 98 bis 99,9 Gew.-% Diethylphosphinsäure und 0,1 bis 2 Gew.-% Ethylphosphonsäure enthalten.

9. Flammgeschützte thermoplastische oder duroplastische Polymerformmasse, Polymer-Formkörper, -Filme, -Fäden und -Fasern enthaltend 0,5 bis 45 Gew.-% eines Gemisches von mindestens einer Dialkylphosphinsäure der Formel (I) 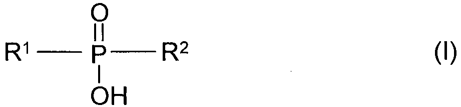 worin
R¹, R² gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 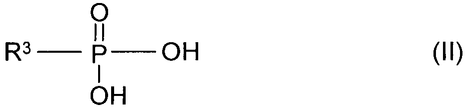 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

10. Flammgeschützte thermoplastische oder duroplastische Polymerformmasse, Polymer-Formkörper, -Filme, -Fäden und -Fasern, enthaltend 1 bis 30 Gew.-% eines Gemisches von mindestens einer Dialkylphosphinsäure der Formel (I) 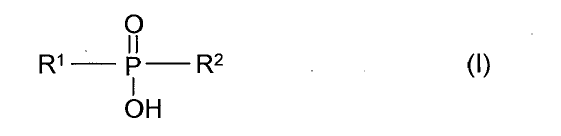 worin
R¹, R² gleich oder verscheiden sind und unabhängig voneinander C₁-C₁₈-Alkyl, C₂-C₁₈-Alkenyl, C₆-C₁₈-Aryl, C₇-C₁₈-Alkyl-Aryl bedeuten
mit mindestens einer Alkylphosphonsäure der Formel (II) 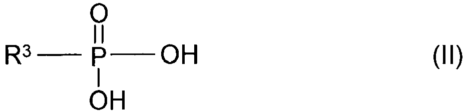 worin
R³ C₁-C₁₈-Alkyl, C₂-C₁₈-Alkenyl, C₆-C₁₈-Aryl oder C₇-C₁₈-Alkyl-Aryl bedeutet und wobei das Gemisch 0,1 bis 99,9 Gew.-% Dialkylphosphinsäure der Formel (I) und 0,1 bis 99,9 Gew.-% Alkylphosphonsäure der Formel (II) enthält, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

## Claims

1. The use of mixtures of at least one dialkylphosphinic acid of the formula (I) 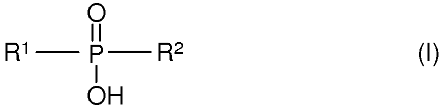 in which
R¹, R² are the same or different and are each independently C₁-C₁₈-alkyl, C₂-C₁₈-alkenyl, C₆-C₁₈-aryl, C₇-C₁₈-alkylaryl,
with at least one alkylphosphonic acid of the formula (II) 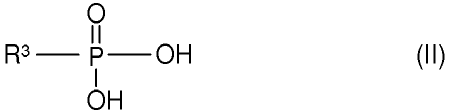 in which
R³ is C₁-C₁₈-alkyl, C₂-C₁₈-alkenyl, C₆-C₁₈-aryl or C₇-C₁₈-alkylaryl and wherein the mixture comprises 0.1 to 99.9% by weight of dialkylphosphinic acid of the formula (I) and 0.1 to 99.9% by weight of alkylphosphonic acid of the formula (II), as a binder, as a crosslinker or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications and in electronics applications.

2. The use of mixtures of at least one dialkylphosphinic acid of the formula (I) 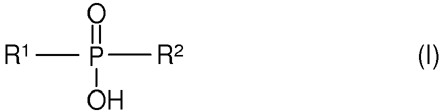 in which
R¹, R² are the same or different and are each independently C₁-C₁₈-alkyl, C₂-C₁₈-alkenyl, C₆-C₁₈-aryl, C₇-C₁₈-alkylaryl,
with at least one alkylphosphonic acid of the formula (II) 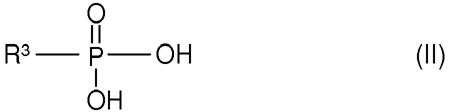 in which
R³ is C₁-C₁₈-alkyl, C₂-C₁₈-alkenyl, C₆-C₁₈-aryl or C₇-C₁₈-alkylaryl,
and wherein the mixture comprises 0.1 to 99.9% by weight of dialkylphosphinic acid of the formula (I) and 0.1 to 99.9% by weight of alkylphosphonic acid of the formula (II), as a flame retardant, especially as a flame retardant for clearcoats and intumescent coatings, as a flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and as a synergist.

3. The use as claimed in claim 1 or 2, wherein R¹, R² and R³ are the same or different and are each methyl, ethyl, n-propyl, isopropyl, n-butyl, isobutyl, tert-butyl, n-pentyl, isopentyl, n-hexyl, isohexyl and/or phenyl.

4. The use as claimed in one or more of claims 1 to 3, wherein they comprise 80 to 99.9% by weight of dialkylphosphinic acid of the formula (I) and 20 to 0.1 % by weight of alkylphosphonic acid of the formula (II).

5. The use as claimed in one or more of claims 1 to 4, wherein they comprise 95 to 99.9% by weight of dialkylphosphinic acid of the formula (I) and 5 to 0.1 % by weight of alkylphosphonic acid of the formula (II).

6. The use as claimed in one or more of claims 1 to 5, wherein they comprise 98 to 99.9% by weight of dialkylphosphinic acid of the formula (I) and 2 to 0.1 % by weight of alkylphosphonic acid of the formula (II).

7. The use as claimed in one or more of claims 1 to 6, wherein the dialkylphosphinic acid is diethylphosphinic acid, ethylpropylphosphinic acid, ethylbutylphosphinic acid, ethylpentylphosphinic acid, ethylhexylphosphinic acid, dipropylphosphinic acid, propylbutylphosphinic acid, propylpentylphosphinic acid, propylhexylphosphinic acid, dibutylphosphinic acid, butylpentylphosphinic acid, butylhexylphosphinic acid, dipentylphosphinic acid, pentylhexylphosphinic acid and/or dihexylphosphinic acid; and the alkylphosphonic acid is ethylphosphonic acid, propylphosphonic acid, butylphosphonic acid, pentylphosphonic acid or hexylphosphonic acid.

8. The use as claimed in one or more of claims 1 to 7, wherein they comprise 98 to 99.9% by weight of diethylphosphinic acid and 0.1 to 2% by weight of ethylphosphonic acid.

9. A flame-retardant thermoplastic or thermoset polymer molding composition or polymer molding, film, filament or fiber comprising 0.5 to 45% by weight of a mixture of at least one dialkylphosphinic acid of the formula (I) 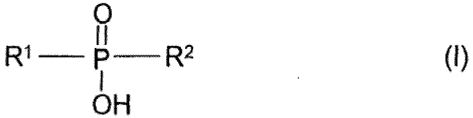 in which
R¹, R² are the same or different and are each independently C₁-C₁₈-alkyl, C₂-C₁₈-alkenyl, C₆-C₁₈-aryl, C₇-C₁₈-alkylaryl,
with at least one alkylphosphonic acid of the formula (II) 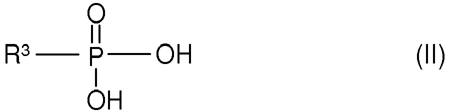 in which
R³ is C₁-C₁₈-alkyl, C₂-C₁₈-alkenyl, C₆-C₁₈-aryl or C₇-C₁₈-alkylaryl,
and wherein the mixture comprises 0.1 to 99.9% by weight of dialkylphosphinic acid of the formula (I) and 0.1 to 99.9% by weight of alkylphosphonic acid of the formula (II), 55 to 99.5% by weight of thermoplastic or thermoset polymer or mixtures thereof, 0 to 55% by weight of additives and 0 to 55% by weight of filler or reinforcing materials, where the sum of the components is 100% by weight.

10. A flame-retardant thermoplastic or thermoset polymer molding composition or polymer molding, film, filament or fiber comprising 1 to 30% by weight of a mixture of at least one dialkylphosphinic acid of the formula (I) 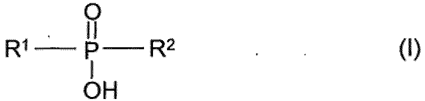 in which
R¹, R² are the same or different and are each independently C₁-C₁₈-alkyl, C₂-C₁₈-alkenyl, C₆-C₁₈-aryl, C₇-C₁₈-alkylaryl,
with at least one alkylphosphonic acid of the formula (II) 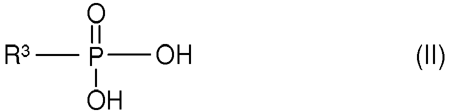 in which
R³ is C₁-C₁₈-alkyl, C₂-C₁₈-alkenyl, C₆-C₁₈-aryl or C₇-C₁₈-alkylaryl,
and wherein the mixture comprises 0.1 to 99.9% by weight of dialkylphosphinic acid of the formula (I) and 0.1 to 99.9% by weight of alkylphosphonic acid of the formula (II), 10 to 95% by weight of thermoplastic or thermoset polymer or mixtures thereof, 2 to 30% by weight of additives and 2 to 30% by weight of filler or reinforcing materials, where the sum of the components is 100% by weight.

## Revendications

1. Utilisation de mélanges d'au moins un acide dialkylphosphinique de formule (I) 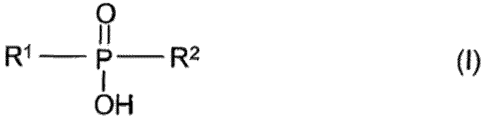 dans laquelle
R¹, R² sont identiques ou différents, et signifient indépendamment l'un de l'autre alkyle en C₁-C₁₈, alcényle en C₂-C₁₈, aryle en C₆-C₁₈, alkyl-aryle en C₇-C₁₈, avec au moins un acide alkylphosphonique de formule (II) 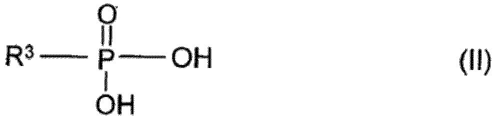 dans laquelle
R³ signifie alkyle en C₁-C₁₈, alcényle en C₂-C₁₈, aryle en C₆-C₁₈ ou alkyl-aryle en C₇-C₁₈,
le mélange contenant 0,1 à 99,9 % en poids d'acide dialkylphosphinique de formule (I) et 0,1 à 99,9 % en poids d'acide alkylphosphonique de formule (II),
en tant que liants, en tant qu'agents de réticulation ou accélérateurs lors du durcissement de résines époxy, de polyuréthanes et de résines de polyesters insaturés, en tant que stabilisateurs de polymères, en tant qu'agents phytoprotecteurs, en tant qu'agents séquestrants, en tant qu'additif pour huile minérale, en tant qu'agents anticorrosion, dans des applications de détergents et dans des applications électroniques.

2. Utilisation de mélanges d'au moins un acide dialkylphosphinique de formule (I) 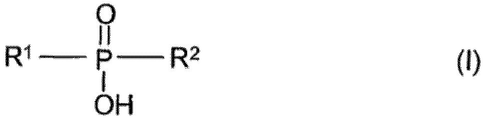 dans laquelle
R¹, R² sont identiques ou différents, et signifient indépendamment l'un de l'autre alkyle en C₁-C₁₈, alcényle en C₂-C₁₈, aryle en C₆-C₁₈, alkyl-aryle en C₇-C₁₈, avec au moins un acide alkylphosphonique de formule (II) 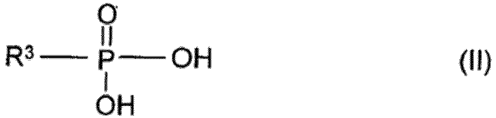 dans laquelle
R³ signifie alkyle en C₁-C₁₈, alcényle en C₂-C₁₈, aryle en C₆-C₁₈ ou alkyl-aryle en C₇-C₁₈,
le mélange contenant 0,1 à 99,9 % en poids d'acide dialkylphosphinique de formule (I) et 0,1 à 99,9 % en poids d'acide alkylphosphonique de formule (II),
en tant qu'agents ignifuges, notamment en tant qu'agents ignifuges pour vernis transparents et revêtements intumescents, en tant qu'agents ignifuges pour le bois et d'autres produits cellulosiques, en tant qu'agents ignifuges réactifs et/ou non réactifs pour polymères, pour la fabrication de matériaux de moulage polymères ignifugés, pour la fabrication de corps moulés polymères ignifugés et/ou pour la protection ignifuge de polyesters et de tissus cellulosiques purs et mixtes par imprégnation, ainsi qu'en tant que synergiste.

3. Utilisation selon la revendication 1 ou 2, **caractérisée en ce que** R¹, R² et R³ sont identiques ou différents, et signifient méthyle, éthyle, n-propyle, iso-propyle, n-butyle, iso-butyle, tert.-butyle, n-pentyle, iso-pentyle, n-hexyle, iso-hexyle et/ou phényle.

4. Utilisation selon une ou plusieurs des revendications 1 à 3, **caractérisée en ce qu'**ils contiennent 80 à 99,9 % en poids d'acide dialkylphosphinique de formule (I) et 20 à 0,1 % en poids d'acide alkylphosphonique de formule (II).

5. Utilisation selon une ou plusieurs des revendications 1 à 4, **caractérisée en ce qu'**ils contiennent 95 à 99,9 % en poids d'acide dialkylphosphinique de formule (I) et 5 à 0,1 % en poids d'acide alkylphosphonique de formule (II).

6. Utilisation selon une ou plusieurs des revendications 1 à 5, **caractérisée en ce qu'**ils contiennent 98 à 99,9 % en poids d'acide dialkylphosphinique de formule (I) et 2 à 0,1 % en poids d'acide alkylphosphonique de formule (II).

7. Utilisation selon une ou plusieurs des revendications 1 à 6, **caractérisée en ce que** l'acide dialkylphosphinique est l'acide diéthylphosphinique, l'acide éthyl-propylphosphinique, l'éther éthyl-butylphosphinique, l'acide éthyl-pentylphosphinique, l'acide éthyl-hexylphosphinique, l'acide dipropylphosphinique, l'acide propyl-butylphosphinique, l'acide propyl-pentylphosphinique, l'acide propyl-hexylphosphinique, l'acide dibutylphosphinique, l'acide butyl-pentylphosphinique, l'acide butyl-hexylphosphinique, l'acide dipentylphosphinique, l'acide pentyl-hexylphosphinique et/ou l'acide dihexylphosphinique ; et l'acide alkylphosphonique est l'acide éthylphosphonique, l'acide propylphosphonique, l'acide butylphosphonique, l'acide pentylphosphonique ou l'acide hexylphosphonique.

8. Utilisation selon une ou plusieurs des revendications 1 à 7, **caractérisée en ce qu'**ils contiennent 98 à 99,9 % en poids d'acide diéthylphosphinique et 0,1 à 2 % en poids d'acide éthylphosphonique.

9. Matériaux de moulage polymères, corps moulés, films, fils et fibres polymères thermoplastiques ou duroplastiques ignifugés, contenant 0,5 à 45 % en poids d'un mélange d'au moins un acide dialkylphosphinique de formule (I) 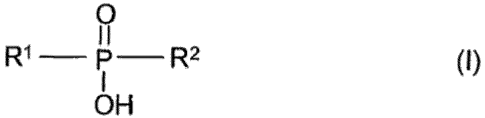 dans laquelle
R¹, R² sont identiques ou différents, et signifient indépendamment l'un de l'autre alkyle en C₁-C₁₈, alcényle en C₂-C₁₈, aryle en C₆-C₁₈, alkyl-aryle en C₇-C₁₈, avec au moins un acide alkylphosphonique de formule (II) 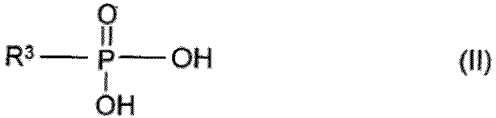 dans laquelle
R³ signifie alkyle en C₁-C₁₈, alcényle en C₂-C₁₈, aryle en C₆-C₁₈ ou alkyl-aryle en C₇-C₁₈,
le mélange contenant 0,1 à 99,9 % en poids d'acide dialkylphosphinique de formule (I) et 0,1 à 99,9 % en poids d'acide alkylphosphonique de formule (II),
55 à 99,5 % en poids d'un polymère thermoplastique ou duroplastique ou de mélanges d'entre eux, 0 à 55 % en poids d'additifs et 0 à 55 % en poids de charges ou de matériaux de renforcement, la somme des composants étant de 100 % en poids.

10. Matériaux de moulage polymères, corps moulés, films, fils et fibres polymères thermoplastiques ou duroplastiques ignifugés, contenant 1 à 30 % en poids d'un mélange d'au moins un acide dialkylphosphinique de formule (I) 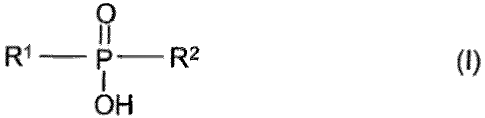 dans laquelle
R¹, R² sont identiques ou différents, et signifient indépendamment l'un de l'autre alkyle en C₁-C₁₈, alcényle en C₂-C₁₈, aryle en C₆-C₁₈, alkyl-aryle en C₇-C₁₈, avec au moins un acide alkylphosphonique de formule (II) 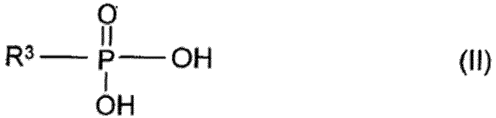 dans laquelle
R³ signifie alkyle en C₁-C₁₈, alcényle en C₂-C₁₈, aryle en C₆-C₁₈ ou alkyl-aryle en C₇-C₁₈,
le mélange contenant 0,1 à 99,9 % en poids d'acide dialkylphosphinique de formule (I) et 0,1 à 99,9 % en poids d'acide alkylphosphonique de formule (II),
10 à 95 % en poids d'un polymère thermoplastique ou duroplastique ou de mélanges d'entre eux, 2 à 30 % en poids d'additifs et 2 à 30 % en poids de charges ou de matériaux de renforcement, la somme des composants étant de 100 % en poids.
